# EUROPEAN PATENT APPLICATION

(11) **EP 4 319 292 A1**
(43) Date of publication of application: **07.02.2024**
(21) Application number: 22779176.1
(22) Date of filing: 02.04.2022
(51) Int. Cl.: H04W 36/00, H04W 36/06

(54) **SCHEDULING METHOD AND APPARATUS, AND DEVICE AND READABLE STORAGE MEDIUM**

(30) Priority: 02.04.2021 CN 202110363806
(71) Applicant: Vivo Mobile Communication Co., Ltd., Dongguan, Guangdong 523863 (CN)
(72) Inventor: ZHENG, Kaili, Dongguan, Guangdong 523863 (CN); SUN, Peng, Dongguan, Guangdong 523863 (CN)
(74) Representative: Winter, Brandl - Partnerschaft mbB
(86) International application number: PCT/CN2022/085093
(87) International publication number: WO 2022/206996

(57) **Abstract**

This application discloses a scheduling method and apparatus, a device, and a readable storage medium and pertains to the field of communications technologies. The scheduling method in an embodiment of this application includes: receiving, by a terminal, first scheduling information and/or second scheduling information; where the first scheduling information is used to schedule a terminal in a case that the terminal reports transmission scheme switching capability information, the transmission scheme switching referring to switching between an SFN transmission scheme and other transmission schemes; and the second scheduling information is used to schedule the terminal in a case that the network-side device configures an SFN transmission scheme.

## Description

### CROSS-REFERENCE TO RELATED APPLICATIONS

This application claims priority to Chinese Patent Application No. 202110363806.7, filed in China on April 02, 2021, which is incorporated herein by reference in its entirety.

### TECHNICAL FIELD

This application pertains to the field of communications technologies and specifically relates to a scheduling method and apparatus, a device, and a readable storage medium.

### BACKGROUND

In the prior art, some types of terminals (for example, user equipment (User Equipment, UE) ) suffer from limited dynamic switching capabilities between a single frequency network (Single Frequency Network, SFN) transmission scheme and other transmission schemes, especially between the SFN transmission scheme and a single transmission reception point (Single Transmission Reception Point, STRP) transmission scheme. Some form of dynamic switching indication or scheduling performed on these types of terminals may result that the terminals are unable to dynamically switch reception algorithms in a timely manner, thereby failing to receive control information and/or data information correctly.

### SUMMARY

Embodiments of this application provide a scheduling configuration method and apparatus, a device, and readable storage medium, so as to solve the problem of scheduling a terminal in a case that the terminal suffers from a limited dynamic switching capability between an SFN transmission scheme and other transmission schemes.

According to a first aspect, a data scheduling method is provided, including:
receiving, by a terminal, first scheduling information and/or second scheduling information.

The first scheduling information is used to schedule a terminal in a case that the terminal reports transmission scheme switching capability information, the transmission scheme switching referring to switching between an SFN transmission scheme and other transmission schemes; and the second scheduling information is used to schedule the terminal in a case that the network-side device configures an SFN transmission scheme.

According to a second aspect, a data scheduling method is provided, including:
transmitting first scheduling information and/or second scheduling information.

The first scheduling information is used to schedule a terminal in a case that the terminal reports transmission scheme switching capability information, the transmission scheme switching referring to switching between an SFN transmission scheme and other transmission schemes; and the second scheduling information is used to schedule the terminal in a case that the network-side device configures an SFN transmission scheme.

According to a third aspect, a scheduling apparatus is provided, including:
a first receiving module configured to receive first scheduling information and/or second scheduling information.

The first scheduling information is used to schedule a terminal in a case that the terminal reports transmission scheme switching capability information, the transmission scheme switching referring to switching between an SFN transmission scheme and other transmission schemes; and the second scheduling information is used to schedule the terminal in a case that the network-side device configures an SFN transmission scheme.

According to a fourth aspect, a scheduling apparatus is provided, including:
a second transmitting module configured to transmit first scheduling information and/or second scheduling information.

The first scheduling information is used to schedule a terminal in a case that the terminal reports transmission scheme switching capability information, the transmission scheme switching referring to switching between an SFN transmission scheme and other transmission schemes; and the second scheduling information is used to schedule the terminal in a case that the network-side device configures an SFN transmission scheme.

According to a fifth aspect, a terminal is provided, including a processor, a memory, and a program stored in the memory and capable of running on the processor, where when the program is executed by the processor, the steps of the method according to the first aspect are implemented.

According to a sixth aspect, a terminal is provided, including a processor and a communications interface, where the processor is configured to implement the steps of the method according to the first aspect.

According to a seventh aspect, a network-side device is provided, including a processor, a memory, and a program stored in the memory and capable of running on the processor, where when the program is executed by the processor, the steps of the method according to the second aspect are implemented.

According to an eighth aspect, a network-side device is provided, including a processor and a communications interface, where the communications interface is configured to implement the steps of the method according to the second aspect.

According to a ninth aspect, a readable storage medium is provided, where the readable storage medium stores a program or instructions, and when the program or instructions are executed by a processor, the steps of the method according to the first aspect or the second aspect are implemented.

According to a tenth aspect, a computer program/program product is provided, where the computer program/program product is stored in a non-volatile storage medium, and the computer program/program product is executed by at least one processor to implement the steps of the method according to the first aspect or the second aspect.

According to an eleventh aspect, a chip is provided, where the chip includes a processor and a communications interface, the communications interface is coupled to the processor, and the processor is configured to run a program or instructions to implement the method for processing according to the first aspect or the second aspect.

In some embodiments of this application, the network-side device schedules the terminal through the first scheduling information and/or the second scheduling information, which can ensure that the terminal can correctly receive the control information and/or data information in a case that the terminal suffers from a limited dynamic switching capability between an SFN transmission scheme and other transmission schemes, especially between the SFN transmission scheme and an STRP transmission scheme.

### BRIEF DESCRIPTION OF DRAWINGS

FIG. 1 is a schematic diagram of SFN transmission;
FIG. 2 is a block diagram of a wireless communications system to which an embodiment of this application is applicable;
FIG. 3 is a first flowchart of a scheduling method according to an embodiment of this application;
FIG. 4 is a second flowchart of a scheduling method according to an embodiment of this application;
FIG. 5 is a third flowchart of a scheduling method according to an embodiment of this application;
FIG. 6 is a first schematic diagram of scheduling according to an embodiment of this application;
FIG. 7 is a second schematic diagram of scheduling according to an embodiment of this application;
FIG. 8 is a third schematic diagram of scheduling according to an embodiment of this application;
FIG. 9 is a fourth schematic diagram of scheduling according to an embodiment of this application;
FIG. 10 is a first schematic diagram of a scheduling apparatus according to an embodiment of this application;
FIG. 11 is a second schematic diagram of a scheduling apparatus according to an embodiment of this application;
FIG. 12 is a schematic diagram of a terminal according to an embodiment of this application; and
FIG. 13 is a schematic diagram of a network-side device according to an embodiment of this application.

### DETAILED DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type and do not limit the quantity of objects. For example, there may be one or a plurality of first objects. In addition, "and" in the specification and claims represents at least one of connected objects, and the character "/" generally indicates an "or" relationship between the contextually associated objects.

It should be noted that technologies described in the embodiments of this application are not limited to a long term evolution (Long Term Evolution, LTE) or LTE-Advanced (LTE-Advanced, LTE-A) system, and may also be applied to other wireless communications systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-Carrier Frequency-Division Multiple Access, SC-FDMA), and other systems. The terms "system" and "network" in the embodiments of this application are often used interchangeably. The technology described may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6^{th} Generation, 6G) communications system.

For better understanding of the embodiments of this application, the following technical points are first described.

### 1. SFN transmission scheme

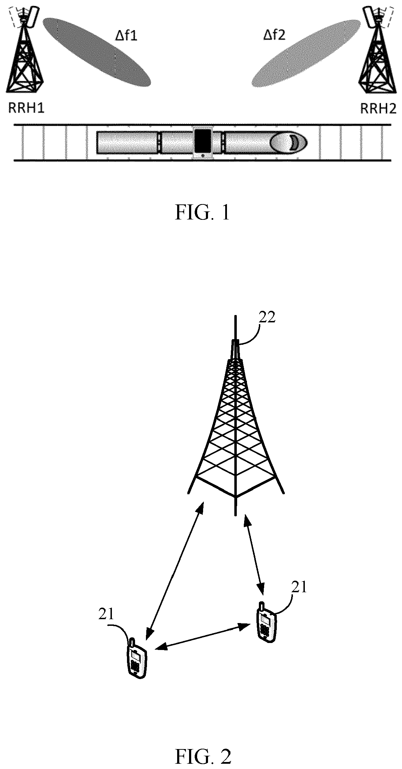

In SFN network deployment, a plurality of remote radio heads (Remote Radio Head, RRH) (or TRP) are connected to one baseband processing unit (baseband processing unit, BBU), so that a terminal does not need to frequently switch base stations during high-speed movement. In addition, the plurality of RRH (TRP) send same data to the terminal, as shown in FIG. 1.

Different position relationships between the terminal and the plurality of RRHs (TRPs) cause transmission signals arriving at the terminal from the plurality of RRHs (TRPs) to have different powers, time delays, phases, and Doppler frequency shifts. When the terminal is in different positions on the rail, SFN signals transmitted to the terminal experience completely different channel characteristics. When the SFN signals from two RRHs (TRPs) arrive at the terminal with a long delay, the SFN signals may be subject to severe deep fading in the frequency domain; and the terminal moving at high speed between the two RRHs causes two Doppler frequency offset effects with opposite signs in the received signal, thereby leading to deep fading in the time domain of the SFN signal. Therefore, to improve the receiving performance of the terminal, the network can dynamically switch the transmission scheme based on a moving position of the terminal, thereby improving the receiving performance of the terminal.

### 2. Control resource set (Control Resource Set, CORESET) and search space (Search Space, SS)

In the related art, the network can configure a plurality of CORESETs. The configuration of a CORESET includes a number of consecutive symbols, frequency domain resources, precoding granularity, interleaving mode, demodulation reference signal (Demodulation Reference Signal, DMRS) mapping type, and the like. A plurality of search spaces can be configured in each CORESET, and the terminal monitors in the plurality of PDCCH search spaces. The configuration of a search space includes the aggregation level, periodicity, and offset for PDCCH monitoring (to determine a monitoring occasion (monitor occasion)) and the like. At a same moment, the terminal may need to perform physical downlink control channel (Physical Downlink Control Channel, PDCCH) monitoring in the plurality of CORESETs.

The search space is further divided into a common search space (Common search space, CSS) and a terminal-specific search space (UE-specific search space, USS). The CSS is used to transmit control information related to broadcast control channel (Broadcast Control Channel, BCCH), paging, random access response (Random Access Response, RAR), and the like. The USS is used to transmit control information related to downlink shared channel (Downlink Shared CHannel, DL-SCH), uplink shared channel (Uplink Shared CHannel, UL-SCH), and the like.

### 3. Transmission configuration indicator (Transmission configuration indicator, TCI) state (state) and quasi co-location (Quasi Co-Location, QCL)

A TCI state is used to indicate the QCL reference relationship between two antenna ports.

QCL means that the average channel delay, delay spread, Doppler frequency offset, Doppler spread, and spatial receive parameters experienced by a symbol on one antenna port can be inferred through another antenna port. Four different types of QCL relationships are designed in new radio (New Radio, NR) to address different transmission scenarios.
(1) Quasi co-location type A (QCL-TypeA), {Doppler frequency shift, Doppler spread, average delay, delay spread}.
(2) Quasi co-location type B (QCL-TypeB), {Doppler frequency shift, Doppler spread}.
(3) Quasi co-location type C (QCL-TypeC), {Doppler frequency shift, average delay}.
(4) Quasi co-location type D (QCL-TypeD), {spatial receive parameter}.

For the physical downlink shared channel (Physical Downlink Shared Channel, PDSCH), the radio resource control (Radio Resource Control, RRC) configures a maximum of M (M ≤ 128) TCI states, and the media access control (media access control, MAC) control element (Control Element, CE) activates N (N ≤ 8) TCI states therefrom, and finally the downlink control information (Downlink Control Information, DCI) indicates one of these N TCI states. For the PDCCH, RRC configures a maximum of L (L ≤ 64) TCI states for each CORESET, and these L TCI states come from the M TCI states configured by RRC for PDSCH. The MAC CE activates one of the L TCI states for a CORESET.
(1) In a case that a PDCCH is DCI format 1_1 (DCI format 1_1) and that a TCI state is configured in an RRC parameter:
   If a scheduling time interval between DCI and a PDSCH is greater than or equal to a threshold (timeDurationForQCL), the QCL reference of the PDSCH is a TCI state in the DCI; and
   If a scheduling time interval between the PDCCH and the PDSCH is less than the threshold (timeDurationForQCL), the PDSCH is maintained consistent with a QCL reference of a CORESET with the lowest identity (Identity, ID) in the latest debugging slot including CORESETs.
(2) In a case that DCI is DCI format 1_0 (DCI format 1_0) and that no TCI state is configured in the RRC parameter:
   If a scheduling time interval between the DCI and the PDSCH is greater than or equal to a threshold (timeDurationForQCL), the QCL reference of the PDSCH is maintained consistent with the QCL reference of a PDCCH that schedules the PDSCH; and
   If a scheduling time interval between the DCI and the PDSCH is less than the threshold (timeDurationForQCL), the PDSCH is maintained consistent with a QCL reference of a CORESET with the lowest ID in the latest debugging slot including CORESETs.

### 4. Multi-TRP (Multiple Transmission Reception Point, MTRP) transmission scheme

In NR-related protocols, multiple MTRP transmission schemes are defined as follows:
Scheme 1a (Scheme 1a) (space division multiplexing (Space Division Multiplexing, SDM));
Scheme 2a (Scheme 2a) (frequency division multiplexing (Frequency Division Multiplexing, FDM), scheme A (SchemA));
Scheme 2b (Scheme 2b) (FDM scheme B (SchemeB));
Scheme 3 (Scheme 3) (TDM SchemeA); and
Scheme 4 (Scheme 4) (slot-based repetition (Slot-based repetition)).

Scheme 2a, Scheme 2b, Scheme 3, and Scheme 4 are indicated by RRC high-level parameters, respectively.
(1) Scheme 2a: The RRC parameter (RepetitionSchemeConfig-r16) is configured as FDM-TDM-r16, the parameter (repetitionScheme-r16) in FDM-TDM-r16 is configured as fdmSchemeA, the number of code-division multiplexing (Code-division Multiplexing, CDM) groups (group) for the PDSCH is 1, and the number of TCI states indicated is 2.
(2) Scheme 2b: The RRC parameter (RepetitionSchemeConfig-r16) is configured as FDM-TDM-r16, the parameter (repetitionScheme-r16) in FDM-TDM-r16 is configured as fdmSchemeB, the number of CDM groups for the PDSCH is 1, and the number of TCI states indicated is 2.
(3) Scheme 3: The RRC parameter (RepetitionSchemeConfig-r16) is configured as FDM-TDM-r16, the parameter (repetitionScheme-r16) in FDM-TDM-r16 is configured as tdmSchemeA, the number of CDM groups for the PDSCH is 1, and the number of TCI states indicated is 2.
(4) Scheme 4: The RRC parameter (RepetitionSchemeConfig-r16) is configured as SlotBased-r16, the RRC parameter PDSCH-config indicates that the PDSCH time domain allocation list (pdsch-TimeDomainAllocationList) has at least one PDSCH time domain resource allocation (PDSCH-TimeDomainResourceAllocation) containing the parameter representing RepNumR16, the number of CDM groups for the PDSCH is 1, and the number of TCI states indicated is 2.
(5) Scheme 1: The pdsch-TimeDomainAllocationList indicated by the RRC parameter PDSCH-config has no any PDSCH-TimeDomainResourceAllocation containing the RepNumR16 parameter, the number of CDM groups for the PDSCH is 2, and the number of TCI states indicated is 2.

In the SFN transmission scheme (such as in the high-speed rail network), the terminal may enable a specific receiving algorithm to receive information transmitted in an SFN scheme, and the specific receiving algorithm is implemented differently from a conventional STRP receiving algorithm.

When the network dynamically indicates the terminal to switch from the SFN transmission scheme to STRP transmission, due to the limitation of terminal capability, the terminal may not be able to dynamically switch the receiving algorithm from the SFN transmission scheme to an STRP transmission scheme immediately; or, when the network sends a PDCCH using an STRP transmission scheme but sends a PDSCH using the SFN transmission scheme, the terminal has to dynamically switch the receiving algorithm back and forth in a timely manner when receiving the PDCCH and the PDSCH, which poses certain challenges for the terminal.

From another perspective, if the terminal can dynamically switch the receiving algorithm in a timely manner, the terminal may need to maintain related operations of the two sets of receiving algorithms simultaneously to prepare for immediate switching, which can lead to an increase in terminal power consumption and unnecessary redundant computational overhead when dynamic switching is not required.

FIG. 2 is a block diagram of a wireless communications system to which an embodiment of this application is applicable. The wireless communications system includes a terminal 21 and a network-side device 22. The terminal 21 may also be referred to as a terminal device or user equipment (User Equipment, UE). The terminal 21 may be a terminal-side device such as a mobile phone, a tablet personal computer (Tablet Personal Computer), a laptop computer (Laptop Computer) also referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device) or a vehicle user equipment (VUE), or a pedestrian user equipment (PUE). The wearable device includes a smart watch, a wristband, earphones, glasses, and the like. It should be noted that the terminal 21 is not limited to any particular type in the embodiments of this application.

The network-side device 22 may be a base station or a core network, where the base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a WiFi node, a transmission reception point (Transmission Reception Point, TRP), a wireless access network node, or another appropriate term in the art. Provided that the same technical effects are achieved, the base station is not limited to a specific technical term. It should be noted that the base station in the NR system is merely used as an example in the embodiments of this application, but a specific type of the base station is not limited.

The following describes in detail a scheduling method and apparatus, a device, and a readable storage medium provided in the embodiments of this application by using some embodiments and application scenarios thereof with reference to the accompanying drawings.

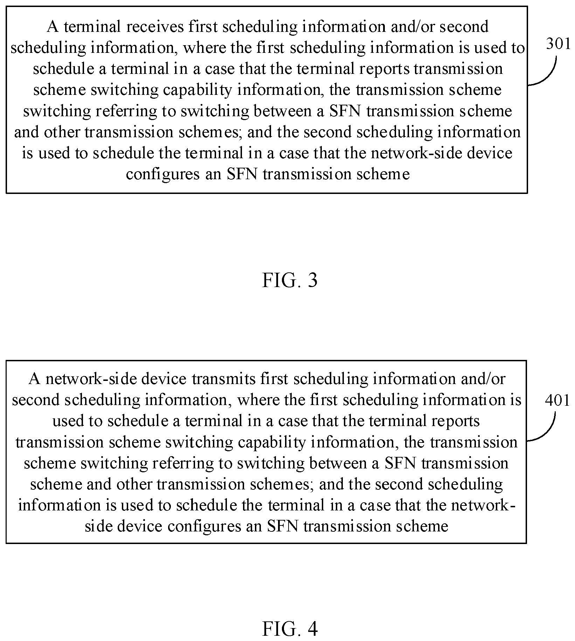

Referring to FIG. 3, an embodiment of this disclosure provides a scheduling method. The method may be executed by a terminal. Specific steps include step 301.

Step 301: A terminal receives first scheduling information and/or second scheduling information, where
the first scheduling information is used to schedule a terminal in a case that the terminal reports transmission scheme switching capability information, the transmission scheme switching referring to switching between an SFN transmission scheme and other transmission schemes; and the second scheduling information is used to schedule the terminal in a case that the network-side device configures an SFN transmission scheme.

In the SFN transmission scheme, the terminal uses a plurality of tracking reference signals (Tracking Reference Signal, TRS) (for example, two or more TRSs) as QCL reference sources for joint processing and reception.

In an implementation of this application, the transmission scheme switching capability information includes one or more of the following:
(1) first information, the first information being used to indicate whether the terminal supports dynamic switching between the SFN transmission scheme and an STRP transmission scheme;
(2) second information, the second information being used to indicate whether the terminal supports dynamic switching between the SFN transmission scheme and a first transmission scheme, where the first transmission scheme includes one or more of the following:
   (a) frequency division multiplexing multi-TRP (MTRP) transmission scheme;
   (b) time division multiplexing multi-TRP transmission scheme; and
   (c) space division multiplexing multi-TRP transmission scheme;
(3) third information, the third information being used to indicate a maximum number of search spaces capable of being associated with control resource set zero (CORESETO) monitored by the terminal;
(4) fourth information, the fourth information being used to indicate types of search spaces capable of being associated with CORESETO monitored by the terminal;
(5) fifth information, the fifth information being used to indicate whether CORESETO monitored by the terminal allows for association of a terminal-specific search space;
(6) sixth information, the sixth information being used to indicate whether CORESETO monitored by the terminal allows terminal-specific scheduling;
(7) seventh information, the seventh information being used to indicate whether the terminal monitors PDCCH information scrambled by a first radio network temporary identifier (Radio Network Temporary Identity, RNTI) on CORESETO; where
   the first RNTI includes one or more of the following types: Interrupted transmission indication RNTI (Interrupted transmission indication RNTI, INT-RNTI), slot format indication RNTI (Slot Format Indication RNTI, SFI-RNTI), transmit power control physical uplink shared channel RNTI (Transmit Power Control-Physical Uplink Control Channel RNTI, TPC-PUSCH-RNTI), transmit power control physical uplink control channel RNTI (Transmit Power Control Physical Uplink Control Channel RNTI, TPC-PUCCH-RNTI), transmit power control channel sounding reference signal RNTI (Transmit Power Control Sounding Reference Signal RNTI, TPC-SRS-RNTI), cell radio network temporary identifier (Cell-Radio Network Temporary Identifier, C-RNTI), modulation coding scheme cell radio network temporary identifier (Modulation Coding Scheme Cell RNTI, MCS-C-RNTI), configured scheduling RNTI (Configured Scheduling RNTI, CS-RNTI), and semi-persistent channel state reference information RNTI (Semi-Persistent CSI RNTI, SP-CSI-RNTI); and
(8) eighth information, the eighth information being used to indicate an effective time of the transmission scheme switching by the terminal, where the effective time of the transmission scheme switching by the terminal is a single value or one or more values in correspondence with one or more subcarrier spacings.

For introduction of frequency division multiplexing multi-TRP transmission scheme, refer to the introduction of Scheme 2a and Scheme 2b in the above MTRP transmission scheme. The time division multiplexing multi-TRP transmission scheme may include an inter-slot time division multiplexing multi-TRP transmission scheme and an intra-slot time division multiplexing multi-TRP transmission scheme. For introduction of space division multiplexing multi-TRP transmission scheme, refer to the introduction of Scheme 1a in the above MTRP transmission scheme.

In one implementation of this application, in a case that the terminal reports the transmission scheme switching capability information, the first scheduling information explicitly or implicitly indicates one or more of the following:
(1) CORESETO related configuration information;
(2) information about a time interval between a first PDCCH and a first PDSCH or between a first PDCCH and a second PDCCH or between a first PDSCH and a second PDSCH; where the first PDCCH is used for scheduling the first PDSCH; and the second PDCCH is used for scheduling the second PDSCH;
(3) TCI state information associated with a PDCCH;
(4) TCI state information associated with a PDSCH; and
(5) MAC CE information for activating a TCI state associated with a PDSCH.

In an implementation of this application, the CORESETO related configuration information satisfies one or more of the following:
(1) the number of search spaces associated with the CORESETO monitored by the terminal is less than or equal to the third information reported by the terminal or a maximum number (N1) of search spaces capable of being associated by default; where the third information indicates a maximum number (N2) of search spaces capable of being associated with CORESETO monitored by the terminal, N1 is greater than 0, and N2 is greater than 0.
(2) search spaces associated with the CORESETO monitored by the terminal include one or more of the following: search space zero; a common search space configured in system information block 1 (System Information Block 1, SIB1); and a common search space configured in a physical downlink control channel common configuration (PDCCH-ConfigCommon); and
(3) the CORESETO is used for public information scheduling.

The public information may include one or more of the following: cell broadcast information, groupcast information, and the like.

In an implementation of this application, the information about a time interval between a first PDCCH and a first PDSCH or between a first PDCCH and a second PDCCH or between a first PDSCH and a second PDSCH satisfies one or more of the following.
(1) In a case that the first PDCCH is associated with one TCI state and that the first PDSCH is associated with two TCI states, a time interval between the first PDCCH and the first PDSCH is greater than or equal to the eighth information (T1) reported by the terminal or a default effective time (T2) of a terminal transmission scheme switching; where
   both T1 and T2 are greater than or equal to zero.
(2) In a case that the first PDCCH is associated with two TCI states and that the first PDSCH is associated with one TCI state, a time interval between the first PDCCH and the first PDSCH is greater than or equal to the eighth information (T1) reported by the terminal or a default effective time (T2) of a terminal transmission scheme switching; where
   both T1 and T2 are greater than or equal to zero.
(3) In a case that the first PDCCH is associated with one TCI state and that the second PDCCH is associated with two TCI states, a time interval between the first PDCCH and the second PDCCH is greater than or equal to the eighth information (T1) reported by the terminal or a default effective time (T2) of a terminal transmission scheme switching; where
   both T1 and T2 are greater than or equal to zero.
(4) In a case that the first PDSCH is associated with one TCI state and that the second PDSCH is associated with two TCI states, a time interval between the first PDSCH and the second PDSCH is greater than or equal to the eighth information (T1) reported by the terminal or a default effective time (T2) of a terminal transmission scheme switching; where
   both T1 and T2 are greater than or equal to zero.

The default effective time T2 of the terminal transmission scheme switching may be a value independent of the subcarrier spacing or may be values in one-to-one correspondence with subcarrier spacings, and the subcarrier spacing is configured by the network-side device.

In an implementation of this application, the TCI state information associated with the PDCCH satisfies one or more of the following.
(1) In a case that a PDSCH is associated with two TCI states and that the PDSCH is scheduled by the PDCCH in the form of DCI format 1_0, the PDCCH is associated with two TCI states.

For example, in a case that a first PDSCH is associated with two TCI states and that the first PDSCH is scheduled by the first PDCCH in the form of DCI format 1_0, the first PDCCH is associated with two TCI states.

For another example, in a case that a second PDSCH is associated with two TCI states and that the second PDSCH is scheduled by a second PDCCH in the form of DCI format 1_0, the second PDCCH is associated with two TCI states.

(2) In a case that a PDSCH is associated with two TCI states and that a PDCCH that schedules the PDSCH is associated with only one TCI state, DCI in the PDCCH carries TCI indication information, and the TCI indication information includes two TCI states. For example, in a case that a first PDSCH is associated with two TCI states and that the first PDCCH that schedules the first PDSCH is associated with only one TCI state, DCI in the first PDCCH carries TCI indication information, and the TCI indication information includes two TCI states.

For another example, in a case that a second PDSCH is associated with two TCI states and that a second PDCCH that schedules the second PDSCH is associated with only one TCI state, DCI in the second PDCCH carries TCI indication information, and the TCI indication information includes two TCI states.

It should be noted that in a case that the PDSCH is associated with two TCI states and that the PDCCH that schedules the PDSCH is associated with only one TCI state, the terminal does not expect that the PDCCH is scheduled in the form of DCI format 1_0.

(3) In a case that a PDSCH is associated with two TCI states and that a scheduling time interval between the PDCCH that schedules the PDSCH and the PDSCH is less than a threshold (timeDurationForQCL), a CORESET with the lowest ID in the latest debugging slot of the PDSCH including CORESETs, is associated with two TCI states; where
a type of the PDSCH includes a terminal-specific type or another type, which is not limited herein; and a type of the PDCCH includes a terminal-specific type or another type, which is not limited herein.

In an implementation of this application, the TCI state information associated with the PDSCH satisfies one or more of the following:
(1) in a case that a PDCCH that schedules the PDSCH is associated with two TCI states, the PDSCH is associated with two TCI states; and
(2) in a case that a PDCCH that schedules the PDSCH is associated with one TCI state, the PDSCH is associated with one TCI state; where
   a type of the PDCCH that schedules the PDSCH includes a terminal-specific type or another type, which is not limited herein; and a type of the PDSCH includes a terminal-specific type or another type, which is not limited herein.

In an implementation of this application, the MAC CE information for activating a TCI state associated with a PDSCH satisfies that the number of TCI states corresponding to each TCI field in the MAC CE information is two.

In an implementation of this application, the second scheduling information includes: PDCCH TCI state information.

In an implementation of this application, the PDCCH TCI state information satisfies one or more of the following:
(1) in a case that a PDSCH is associated with two TCI states, the PDCCH that schedules the PDSCH is associated with two TCI states;
(2) in a case that a PDSCH is associated with two TCI states and that the PDSCH is scheduled by the PDCCH in the form of DCI format 1_0, the PDCCH is associated with two TCI states;
(3) in a case that a PDSCH is associated with two TCI states and that DCI in the PDCCH that schedules the PDSCH carries TCI indication information, the TCI indication information includes two TCI states; and
(4) in a case that a PDSCH is associated with two TCI states and that a time interval between the PDCCH that schedules the PDSCH and the PDSCH is less than a threshold (timeDurationForQCL), a CORESET with the lowest ID in the latest debugging slot of the PDSCH including CORESETs is associated with two TCI states; where
   a type of the PDSCH includes a terminal-specific type or another type, which is not limited herein; and a type of the PDCCH includes a terminal-specific type or another type, which is not limited herein.

In an implementation of this application, the second scheduling information includes PDSCH TCI state information.

In an implementation of this application, the PDSCH TCI state information satisfies one or more of the following:
(1) in a case that a PDCCH that schedules the PDSCH is associated with two TCI states, the PDSCH is associated with two TCI states; and
(2) in a case that a PDCCH that schedules the PDSCH is associated with one TCI state, the PDSCH is associated with one TCI state; where
   a type of the PDCCH that schedules the PDSCH includes a terminal-specific type or another type, which is not limited herein; and a type of the PDSCH includes a terminal-specific type or another type, which is not limited herein.

In some embodiments of this application, the network-side device schedules the terminal through the first scheduling information and/or the second scheduling information, which can ensure that the terminal can correctly receive the control information and/or data information in a case that the terminal suffers from a limited dynamic switching capability between an SFN transmission scheme and other transmission schemes, especially between the SFN transmission scheme and an STRP transmission scheme.

Referring to FIG. 4, an embodiment of this disclosure provides a scheduling method. The method may be executed by network-side device. Specific steps include step 401.

Step 401: Transmit first scheduling information and/or second scheduling information, where
the first scheduling information is used to schedule a terminal in a case that the terminal reports transmission scheme switching capability information, the transmission scheme switching referring to switching between an SFN transmission scheme and other transmission schemes; and the second scheduling information is used to schedule the terminal in a case that the network-side device configures an SFN transmission scheme.

In the SFN transmission scheme, the terminal uses a plurality of TRSs as QCL reference sources for joint processing and reception. In an implementation of this application, the transmission scheme switching capability information includes one or more of the following:
(1) first information, the first information being used to indicate whether the terminal supports dynamic switching between the SFN transmission scheme and a TRP transmission scheme;
(2) second information, the second information being used to indicate whether the terminal supports dynamic switching between the SFN transmission scheme and a first transmission scheme, where the first transmission scheme includes one or more of the following:
   (a) frequency division multiplexing multi-TRP transmission scheme;
   (b) time division multiplexing multi-TRP transmission scheme; and
   (c) space division multiplexing multi-TRP transmission scheme;
(3) third information, the third information being used to indicate a maximum number of search spaces capable of being associated with CORESETO monitored by the terminal;
(4) fourth information, the fourth information being used to indicate types of search spaces capable of being associated with CORESETO monitored by the terminal;
(5) fifth information, the fifth information being used to indicate whether CORESETO monitored by the terminal allows for association of a terminal-specific search space;
(6) sixth information, the sixth information being used to indicate whether CORESETO monitored by the terminal allows terminal-specific scheduling;
(7) seventh information, the seventh information being used to indicate whether the terminal monitors PDCCH information scrambled by a first RNTI on CORESETO, where
   the first RNTI includes one or more of the following types: INT-RNTI, SFI-RNTI, TPC-PUSCH-RNTI, TPC-PUCCH-RNTI, TPC-SRS-RNTI, C-RNTI, MCS-C-RNTI, CS-RNTI, and SP-CSI-RNTI; and
(8) eighth information, the eighth information being used to indicate an effective time of the transmission scheme switching by the terminal, where
   the effective time of the transmission scheme switching by the terminal is a single value or one or more values in correspondence with one or more subcarrier spacings.

In one implementation of this application, in a case that the terminal reports the transmission scheme switching capability information, the first scheduling information explicitly or implicitly indicates one or more of the following:
(1) CORESETO related configuration information;
(2) information for defining a time interval between a first PDCCH and a first PDSCH or between a first PDCCH and a second PDCCH or between a first PDSCH and a second PDSCH; where the first PDCCH is used for scheduling the first PDSCH; and the second PDCCH is used for scheduling the second PDSCH;
(3) TCI state information associated with a PDCCH;
(4) TCI state information associated with a PDSCH; and
(5) MAC CE information for activating a TCI state associated with a PDSCH.

In an implementation of this application, the CORESETO related configuration information satisfies one or more of the following:
(1) the number of search spaces associated with the CORESETO monitored by the terminal is less than or equal to the third information reported by the terminal or a maximum number (N1) of search spaces capable of being associated by default; where the third information indicates a maximum number (N2) of search spaces capable of being associated with CORESETO monitored by the terminal, N1 is greater than 0, and N2 is greater than 0;
(2) search spaces associated with the CORESETO monitored by the terminal include one or more of the following: search space zero; a common search space configured in system information block 1; and a common search space configured in a physical downlink control channel common configuration; and
(3) the CORESETO is used for public information scheduling.

The public information may include one or more of the following: cell broadcast information, groupcast information, and the like.

In an implementation of this application, the information about a time interval between a first PDCCH and a first PDSCH or between a first PDCCH and a second PDCCH or between a first PDSCH and a second PDSCH satisfies one or more of the following.
(1) In a case that the first PDCCH is associated with one TCI state and that the first PDSCH is associated with two TCI states, a time interval between the first PDCCH and the first PDSCH is greater than or equal to the eighth information (T1) reported by the terminal or a default effective time (T2) of a terminal transmission scheme switching; where
   both T1 and T2 are greater than or equal to zero.
(2) In a case that the first PDCCH is associated with two TCI states and that the first PDSCH is associated with one TCI state, a time interval between the first PDCCH and the first PDSCH is greater than or equal to the eighth information (T1) reported by the terminal or a default effective time (T2) of a terminal transmission scheme switching; where
   both T1 and T2 are greater than or equal to zero.
(3) In a case that the first PDCCH is associated with one TCI state and that the second PDCCH is associated with two TCI states, a time interval between the first PDCCH and the second PDCCH is greater than or equal to the eighth information (T1) reported by the terminal or a default effective time (T2) of a terminal transmission scheme switching; where
   both T1 and T2 are greater than or equal to zero.
(4) In a case that the first PDSCH is associated with one TCI state and that the second PDSCH is associated with two TCI states, a time interval between the first PDSCH and the second PDSCH is greater than or equal to the eighth information (T1) reported by the terminal or a default effective time (T2) of a terminal transmission scheme switching; where
   both T1 and T2 are greater than or equal to zero.

The default effective time T2 of the terminal transmission scheme switching is a value independent of the subcarrier spacing or values in one-to-one correspondence with subcarrier spacings, and the subcarrier spacing is configured by the network-side device.

In an implementation of this application, the TCI state information associated with the PDCCH satisfies one or more of the following.
(1) In a case that a PDSCH is associated with two TCI states and that the PDSCH is scheduled by the PDCCH in the form of DCI format 1_0, the PDCCH is associated with two TCI states.
(2) In a case that a PDSCH is associated with two TCI states and that the PDCCH that schedules the PDSCH is associated with only one TCI state, DCI in the PDCCH carries TCI indication information, and the TCI indication information includes two TCI states.

It should be noted that in a case that the PDSCH is associated with two TCI states and that the PDCCH that schedules the PDSCH is associated with only one TCI state, the terminal does not expect that the PDCCH is scheduled in the form of DCI format 1_0.

(3) In a case that a PDSCH is associated with two TCI states and that a scheduling time interval between the PDCCH that schedules the PDSCH and the PDSCH is less than a threshold, a CORESET with the lowest ID in the latest debugging slot of the PDSCH including CORESETs is associated with two TCI states; where
a type of the PDSCH includes a terminal-specific type or another type, which is not limited herein; and a type of the PDCCH includes a terminal-specific type or another type, which is not limited herein.

In an implementation of this application, the TCI state information associated with the PDSCH satisfies one or more of the following:
(1) in a case that a PDCCH that schedules the PDSCH is associated with two TCI states, the PDSCH is associated with two TCI states; and
(2) in a case that a PDCCH that schedules the PDSCH is associated with one TCI state, the PDSCH is associated with one TCI state; where
   a type of the PDCCH that schedules the PDSCH includes a terminal-specific type or another type, which is not limited herein; and a type of the PDSCH includes a terminal-specific type or another type, which is not limited herein.

In an implementation of this application, the MAC CE information for activating a PDSCH TCI state satisfies that the number of TCI states corresponding to each TCI field in the MAC CE information is two.

In an implementation of this application, the second scheduling information includes: PDCCH TCI state information.

In an implementation of this application, the PDCCH TCI state information satisfies one or more of the following:
(1) in a case that a PDSCH is associated with two TCI states, the PDCCH that schedules the PDSCH is associated with two TCI states;
(2) in a case that a PDSCH is associated with two TCI states and that the PDSCH is scheduled by the PDCCH in the form of DCI format 1_0, the PDCCH is associated with two TCI states;
(3) in a case that a PDSCH is associated with two TCI states and that DCI in the PDCCH that schedules the PDSCH carries TCI indication information, the TCI indication information includes two TCI states; and
(4) in a case that a PDSCH is associated with two TCI states and that a time interval between the PDCCH that schedules the PDSCH and the PDSCH is less than a threshold, a CORESET with the lowest ID in the latest debugging slot of the PDSCH including CORESETs is associated with two TCI states; where
   a type of the PDSCH includes a terminal-specific type or another type, which is not limited herein; and a type of the PDCCH includes a terminal-specific type or another type, which is not limited herein.

In an implementation of this application, the second scheduling information includes PDSCH TCI state information.

In an implementation of this application, the PDSCH TCI state information satisfies one or more of the following:
(1) in a case that a PDCCH that schedules the PDSCH is associated with two TCI states, the PDSCH is associated with two TCI states; and
(2) in a case that a PDCCH that schedules the PDSCH is associated with one TCI state, the PDSCH is associated with one TCI state; where
   a type of the PDCCH that schedules the PDSCH includes a terminal-specific type or another type, which is not limited herein; and a type of the PDSCH includes a terminal-specific type or another type, which is not limited herein.

In some embodiments of this application, the network-side device schedules the terminal through the first scheduling information and/or the second scheduling information, which can ensure that the terminal can correctly receive the control information and/or data information in a case that the terminal suffers from a limited dynamic switching capability between an SFN transmission scheme and other transmission schemes, especially between the SFN transmission scheme and an STRP transmission scheme.

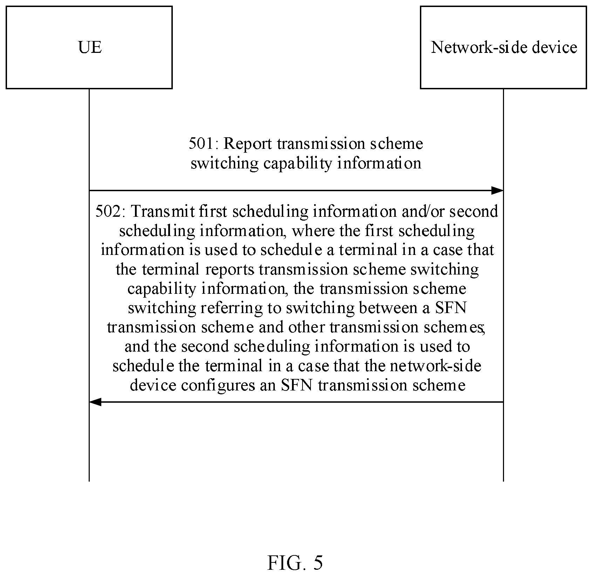

Referring to FIG. 5, an embodiment of this disclosure provides a scheduling method. Specific steps include step 501 and step 502.

Step 501: A terminal reports transmission scheme switching capability information to a network-side device.

Step 502: The network-side device transmits first scheduling information and/or second scheduling information to the terminal, where
the first scheduling information is used to schedule a terminal in a case that the terminal reports transmission scheme switching capability information, the transmission scheme switching referring to switching between an SFN transmission scheme and other transmission schemes; and the second scheduling information is used to schedule the terminal in a case that the network-side device configures an SFN transmission scheme.

In the SFN transmission scheme, the terminal uses a plurality of TRSs as QCL reference sources for joint processing and reception.

For related descriptions about transmission scheme switching capability information, first scheduling information, and second scheduling information, reference may be made to related content in the embodiments shown in FIG. 3 and FIG. 4.

The following describes the embodiments of this application with reference to Implementation 1 to Implementation 3.

### Implementation 1

### Method for indicating SFN transmission scheme

1. For a PDCCH, an SFN transmission scheme can be indicated for transmission of the PDCCH in the following manners:
   (a) configured by an RRC parameter;
   (b) the number of TCI states indicated in a TCI state field of a MAC CE is equal to 2; and
   (c) a combination of the above manners.
2. For a PDSCH, an SFN transmission scheme can be indicated for transmission of the PDSCH in the following manners:
   (a) configured by an RRC parameter;
   (b) the number of TCI states in DCI codepoint (codepoint) is equal to 2;
   (c) The QCL-type of a TCI state configured or indicated in RRC, MAC CE, and DCI is {average delay, delay spread}, or {delay spread};
   (d) the number of TCI states associated with the PDCCH that schedules the PDSCH is equal to 2; and
   (e) a combination of the above manners.

### Implementation 2

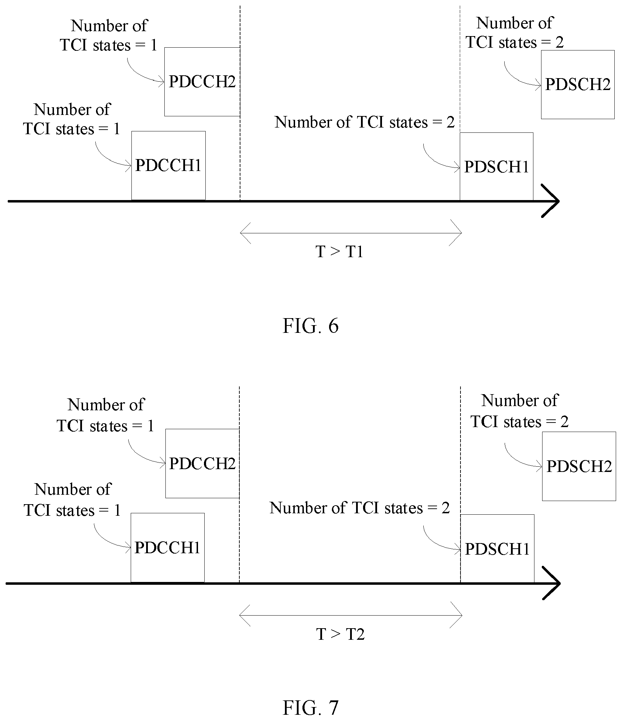

(1) Referring to FIG. 6, PDSCH1 is scheduled by PDCCH1, and PDSCH2 is scheduled by PDCCH2, with the number of TCI states associated with each shown in the figure. Assuming that an effective time of transmission scheme switching reported by the terminal is T1, and that a time interval between the last symbol of PDCCH2 and the first symbol of PDSCH1 is T, because T > T1, the terminal has sufficient time to switch from an algorithm for receiving PDCCH1 to an algorithm for receiving PDSCH1. Therefore, such scheduling can be applied to terminals with limited capabilities in dynamic switching between STRP and SFN transmission schemes.
(2) Referring to FIG. 7, assuming that T2 is a time guard interval pre-agreed between the network and the terminal, because T > T2, the terminal has sufficient time to switch from an algorithm for receiving PDCCH1 to an algorithm for receiving PDSCH1. Therefore, such scheduling can be applied to terminals with limited capabilities in dynamic switching between STRP and SFN transmission schemes.

### Implementation 3

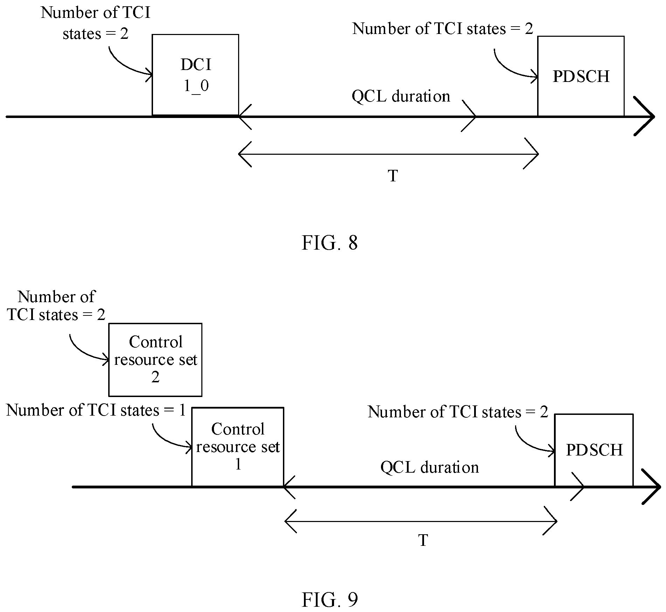

(1) Referring to FIG. 8, the network indicates the number of 2 TCI states for DCI format 1_0 through MAC CE, and a time interval T between DCI format 1_0 and its scheduled PDSCH is greater than a threshold (timeDurationForQCL), where an SFN transmission scheme is configured by the network for the PDSCH. Because no TCI indication is carried in DCI format 1_0, the TCI state of the PDSCH is consistent with the TCI state of the DCI format 1_0 by default. It should be noted that because the network has indicated that the transmission scheme of the PDSCH is SFN, the terminal does not expect the number of TCI states of the DCI format 1_0 that schedules the PDSCH to be 1.
(2) Referring to FIG. 9, a PDSCH is scheduled by a PDCCH in CORESET1, and an SFN transmission scheme is configured by the network for the PDSCH. However, because a time interval between the PDSCH and the PDCCH that schedules the PDSCH is less than a threshold (timeDurationForQCL), the terminal does not have sufficient time to decode DCI information therefrom. Therefore, a default QCL reference of the PDSCH is maintained consistent with a QCL reference of a CORESET with the lowest ID and associated with two TCI states in the latest debugging slot including CORESETs, that is, CORESET2 in the figure.

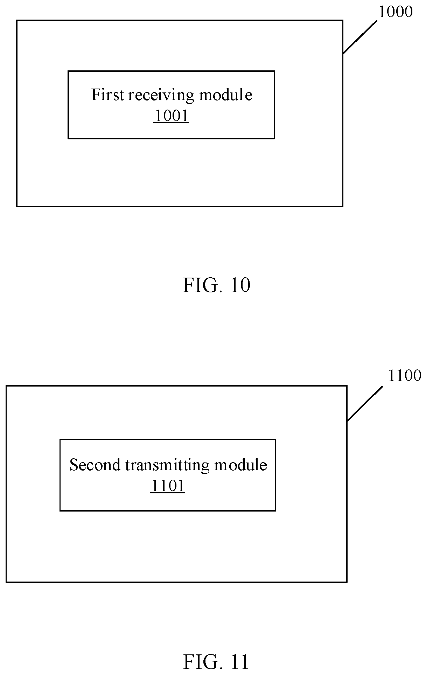

Referring to FIG. 10, an embodiment of this application provides a scheduling apparatus, which is applied to a terminal. The apparatus 1000 includes:
a first receiving module 1001 configured to receive first scheduling information and/or second scheduling information.

The first scheduling information is used to schedule a terminal in a case that the terminal reports transmission scheme switching capability information, the transmission scheme switching referring to switching between an SFN transmission scheme and other transmission schemes; and the second scheduling information is used to schedule the terminal in a case that the network-side device configures an SFN transmission scheme.

In the SFN transmission scheme, the terminal uses a plurality of TRSs as QCL reference sources for joint processing and reception.

In an implementation of this application, the transmission scheme switching capability information includes one or more of the following:
(1) first information, the first information being used to indicate whether the terminal supports dynamic switching between the SFN transmission scheme and a single transmission reception point TRP transmission scheme;
(2) second information, the second information being used to indicate whether the terminal supports dynamic switching between the SFN transmission scheme and a first transmission scheme, where the first transmission scheme includes one or more of the following:
   (a) frequency division multiplexing multi-TRP transmission scheme;
   (b) time division multiplexing multi-TRP transmission scheme; and
   (c) space division multiplexing multi-TRP transmission scheme;
(3) third information, the third information being used to indicate a maximum number of search spaces capable of being associated with CORESETO monitored by the terminal;
(4) fourth information, the fourth information being used to indicate types of search spaces capable of being associated with CORESETO monitored by the terminal;
(5) fifth information, the fifth information being used to indicate whether CORESETO monitored by the terminal allows for association of a terminal-specific search space;
(6) sixth information, the sixth information being used to indicate whether CORESETO monitored by the terminal allows terminal-specific scheduling;
(7) seventh information, the seventh information being used to indicate whether the terminal monitors PDCCH information scrambled by a first RNTI on CORESETO, where
   the first RNTI includes one or more of the following types: INT-RNTI, SFI-RNTI, TPC-PUSCH-RNTI, TPC-PUCCH-RNTI, TPC-SRS-RNTI, C-RNTI, MCS-C-RNTI, CS-RNTI, and SP-CSI-RNTI; and
(8) eighth information, the eighth information being used to indicate an effective time of the transmission scheme switching by the terminal, where the effective time of the transmission scheme switching by the terminal is a single value or one or more values in correspondence with one or more subcarrier spacings.

In one implementation of this application, in a case that the terminal reports the transmission scheme switching capability information, the first scheduling information explicitly or implicitly indicates one or more of the following:
CORESETO related configuration information;
information about a time interval between a first PDCCH and a first PDSCH or between a first PDCCH and a second PDCCH or between a first PDSCH and a second PDSCH; where the first PDCCH is used for scheduling the first PDSCH; and the second PDCCH is used for scheduling the second PDSCH;
TCI state information associated with a PDCCH;
TCI state information associated with a PDSCH; and
MAC CE information for activating a TCI state associated with a PDSCH.

In an implementation of this application, the CORESETO related configuration information satisfies one or more of the following:
the number of search spaces associated with the CORESETO monitored by the terminal is less than or equal to the third information reported by the terminal or a maximum number of search spaces capable of being associated by default; where the third information indicates a maximum number of search spaces capable of being associated with CORESETO monitored by the terminal;
search spaces associated with the CORESETO monitored by the terminal include one or more of the following: search space zero; a common search space configured in system information block 1; and a common search space configured in a physical downlink control channel common configuration; and
the CORESETO is used for public information scheduling.

In an implementation of this application, the information about a time interval between a first PDCCH and a first PDSCH or between a first PDCCH and a second PDCCH or between a first PDSCH and a second PDSCH satisfies one or more of the following:
in a case that the first PDCCH is associated with one TCI state and that the first PDSCH is associated with two TCI states, a time interval between the first PDCCH and the first PDSCH is greater than or equal to the eighth information reported by the terminal or a default effective time of a terminal transmission scheme switching;
in a case that the first PDCCH is associated with two TCI states and that the first PDSCH is associated with one TCI state, a time interval between the first PDCCH and the first PDSCH is greater than or equal to the eighth information reported by the terminal or a default effective time of a terminal transmission scheme switching;
in a case that the first PDCCH is associated with one TCI state and that the second PDCCH is associated with two TCI states, a time interval between the first PDCCH and the second PDCCH is greater than or equal to the eighth information reported by the terminal or a default effective time of a terminal transmission scheme switching; and
in a case that the first PDSCH is associated with one TCI state and that the second PDSCH is associated with two TCI states, a time interval between the first PDSCH and the second PDSCH is greater than or equal to the eighth information reported by the terminal or a default effective time of a terminal transmission scheme switching; where
the default effective time of the terminal transmission scheme switching is a value independent of the subcarrier spacing or values in one-to-one correspondence with subcarrier spacings, and the subcarrier spacing is configured by the network-side device.

In an implementation of this application, the TCI state information associated with the PDCCH satisfies one or more of the following.
in a case that a PDSCH is associated with two TCI states and that the PDSCH is scheduled by the PDCCH in the form of DCI format 1_0, the PDCCH is associated with two TCI states;
in a case that a PDSCH is associated with two TCI states and that the PDCCH that schedules the PDSCH is associated with only one TCI state, DCI in the PDCCH carries TCI indication information, and the TCI indication information includes two TCI states; and
in a case that a PDSCH is associated with two TCI states and that a scheduling time interval between the PDCCH that schedules the PDSCH and the PDSCH is less than a threshold, a CORESET with the lowest ID in the latest debugging slot of the PDSCH including CORESETs is associated with two TCI states; where
a type of the PDSCH includes a terminal-specific type or another type, which is not limited herein; and a type of the PDCCH includes a terminal-specific type or another type, which is not limited herein.

In an implementation of this application, the TCI state information associated with the PDSCH satisfies one or more of the following:
in a case that a PDCCH that schedules the PDSCH is associated with two TCI states, the PDSCH is associated with two TCI states; and
in a case that a PDCCH that schedules the PDSCH is associated with one TCI state, the PDSCH is associated with one TCI state; where
a type of the PDCCH that schedules the PDSCH includes a terminal-specific type or another type, which is not limited herein; and a type of the PDSCH includes a terminal-specific type or another type, which is not limited herein.

In an implementation of this application, the MAC CE information for activating a TCI state associated with a PDSCH satisfies that the number of TCI states corresponding to each TCI field in the MAC CE information is two.

In an implementation of this application, the second scheduling information includes: PDCCH TCI state information.

In an implementation of this application, the PDCCH TCI state information satisfies one or more of the following:
in a case that a PDSCH is associated with two TCI states, the PDCCH that schedules the PDSCH is associated with two TCI states; and
in a case that a PDSCH is associated with two TCI states and that the PDSCH is scheduled by the PDCCH in the form of DCI format 1_0, the PDCCH is associated with two TCI states;
in a case that a PDSCH is associated with two TCI states and that DCI in the PDCCH that schedules the PDSCH carries TCI indication information, the TCI indication information includes two TCI states; and
in a case that a PDSCH is associated with two TCI states and that a time interval between the PDCCH that schedules the PDSCH and the PDSCH is less than a threshold, a CORESET with the lowest identity ID in the latest debugging slot of the PDSCH including CORESETs is associated with two TCI states; where
a type of the PDSCH includes a terminal-specific type or another type, which is not limited herein; and a type of the PDCCH includes a terminal-specific type or another type, which is not limited herein.

In an implementation of this application, the second scheduling information includes PDSCH TCI state information.

In an implementation of this application, the PDSCH TCI state information satisfies one or more of the following:
in a case that a PDCCH that schedules the PDSCH is associated with two TCI states, the PDSCH is associated with two TCI states; and
in a case that a PDCCH that schedules the PDSCH is associated with one TCI state, the PDSCH is associated with one TCI state; where
a type of the PDCCH that schedules the PDSCH includes a terminal-specific type or another type, which is not limited herein; and a type of the PDSCH includes a terminal-specific type or another type, which is not limited herein.

The apparatus provided in this embodiment of this application is capable of implementing the processes implemented in the method embodiment shown in FIG. 3, with the same technical effects achieved. To avoid repetition, details are not described herein again.

Referring to FIG. 11, an embodiment of this application provides a scheduling apparatus, which is applied to a network-side device. The apparatus 1100 includes:
a second transmitting module 1101 configured to transmit first scheduling information and/or second scheduling information.

The first scheduling information is used to schedule a terminal in a case that the terminal reports transmission scheme switching capability information, the transmission scheme switching referring to switching between an SFN transmission scheme and other transmission schemes; and the second scheduling information is used to schedule the terminal in a case that the network-side device configures an SFN transmission scheme.

In the SFN transmission scheme, the terminal uses a plurality of TRSs as QCL reference sources for joint processing and reception.

In an implementation of this application, the transmission scheme switching capability information includes one or more of the following:
(1) first information, the first information being used to indicate whether the terminal supports dynamic switching between the SFN transmission scheme and a single transmission reception point TRP transmission scheme;
(2) second information, the second information being used to indicate whether the terminal supports dynamic switching between the SFN transmission scheme and a first transmission scheme, where the first transmission scheme includes one or more of the following:
   (a) frequency division multiplexing multi-TRP transmission scheme;
   (b) time division multiplexing multi-TRP transmission scheme; and
   (c) space division multiplexing multi-TRP transmission scheme;
(3) third information, the third information being used to indicate a maximum number of search spaces capable of being associated with CORESETO monitored by the terminal;
(4) fourth information, the fourth information being used to indicate types of search spaces capable of being associated with CORESETO monitored by the terminal;
(5) fifth information, the fifth information being used to indicate whether CORESETO monitored by the terminal allows for association of a terminal-specific search space;
(6) sixth information, the sixth information being used to indicate whether CORESETO monitored by the terminal allows terminal-specific scheduling;
(7) seventh information, the seventh information being used to indicate whether the terminal monitors PDCCH information scrambled by a first RNTI on CORESETO, where
   optionally, the first RNTI includes one or more of the following types: INT-RNTI, SFI-RNTI, TPC-PUSCH-RNTI, TPC-PUCCH-RNTI, TPC-SRS-RNTI, C-RNTI, MCS-C-RNTI, CS-RNTI, and SP-CSI-RNTI; and
(8) eighth information, the eighth information being used to indicate an effective time of the transmission scheme switching by the terminal, where
   the effective time of the transmission scheme switching by the terminal is a single value or one or more values in correspondence with one or more subcarrier spacings.

In one implementation of this application, in a case that the terminal reports the transmission scheme switching capability information, the first scheduling information explicitly or implicitly indicates one or more of the following:
CORESETO related configuration information;
information for defining a time interval between a first PDCCH and a first PDSCH or between a first PDCCH and a second PDCCH or between a first PDSCH and a second PDSCH; where the first PDCCH is used for scheduling the first PDSCH; and the second PDCCH is used for scheduling the second PDSCH;
TCI state information associated with a PDCCH;
TCI state information associated with a PDSCH; and
MAC CE information for activating a TCI state associated with a PDSCH.

In an implementation of this application, the CORESETO related configuration information satisfies one or more of the following:
the number of search spaces associated with the CORESETO monitored by the terminal is less than or equal to the third information reported by the terminal or a maximum number of search spaces capable of being associated by default; where the third information indicates a maximum number of search spaces capable of being associated with CORESETO monitored by the terminal;
search spaces associated with the CORESETO monitored by the terminal include one or more of the following: search space zero; a common search space configured in system information block 1; and a common search space configured in a physical downlink control channel common configuration; and
the CORESETO is used for public information scheduling.

In an implementation of this application, the information about a time interval between a first PDCCH and a first PDSCH or between a first PDCCH and a second PDCCH or between a first PDSCH and a second PDSCH satisfies one or more of the following:
in a case that the first PDCCH is associated with one TCI state and that the first PDSCH is associated with two TCI states, a time interval between the first PDCCH and the first PDSCH is greater than or equal to the eighth information reported by the terminal or a default effective time of a terminal transmission scheme switching;
in a case that the first PDCCH is associated with two TCI states and that the first PDSCH is associated with one TCI state, a time interval between the first PDCCH and the first PDSCH is greater than or equal to the eighth information reported by the terminal or a default effective time of a terminal transmission scheme switching;
in a case that the first PDCCH is associated with one TCI state and that the second PDCCH is associated with two TCI states, a time interval between the first PDCCH and the second PDCCH is greater than or equal to the eighth information reported by the terminal or a default effective time of a terminal transmission scheme switching; and
in a case that the first PDSCH is associated with one TCI state and that the second PDSCH is associated with two TCI states, a time interval between the first PDSCH and the second PDSCH is greater than or equal to the eighth information reported by the terminal or a default effective time of a terminal transmission scheme switching; where
the default effective time of the terminal transmission scheme switching is a value independent of the subcarrier spacing or values in one-to-one correspondence with subcarrier spacings, and the subcarrier spacing is configured by the network-side device.

In an implementation of this application, the TCI state information associated with the PDCCH satisfies one or more of the following:
in a case that a PDSCH is associated with two TCI states and that the PDSCH is scheduled by the PDCCH in the form of DCI format 1_0, the PDCCH is associated with two TCI states;
in a case that a PDSCH is associated with two TCI states and that the PDCCH that schedules the PDSCH is associated with only one TCI state, DCI in the PDCCH carries TCI indication information, and the TCI indication information includes two TCI states; and
in a case that a PDSCH is associated with two TCI states and that a scheduling time interval between the PDCCH that schedules the PDSCH and the PDSCH is less than a threshold, a CORESET with the lowest ID in the latest debugging slot of the PDSCH including CORESETs is associated with two TCI states; where
a type of the PDSCH includes a terminal-specific type or another type, which is not limited herein; and a type of the PDCCH includes a terminal-specific type or another type, which is not limited herein.

In an implementation of this application, the TCI state information associated with the PDSCH satisfies one or more of the following:
in a case that a PDCCH that schedules the PDSCH is associated with two TCI states, the PDSCH is associated with two TCI states; and
in a case that a PDCCH that schedules the PDSCH is associated with one TCI state, the PDSCH is associated with one TCI state; where
a type of the PDCCH that schedules the PDSCH includes a terminal-specific type or another type, which is not limited herein; and a type of the PDSCH includes a terminal-specific type or another type, which is not limited herein.

In an implementation of this application, the MAC CE information for activating a PDSCH TCI state satisfies that the number of TCI states corresponding to each TCI field in the MAC CE information is two.

In an implementation of this application, the second scheduling information includes: PDCCH TCI state information.

In an implementation of this application, the PDCCH TCI state information satisfies one or more of the following:
in a case that a PDSCH is associated with two TCI states, the PDCCH that schedules the PDSCH is associated with two TCI states; and
in a case that a PDSCH is associated with two TCI states and that the PDSCH is scheduled by the PDCCH in the form of DCI format 1_0, the PDCCH is associated with two TCI states;
in a case that a PDSCH is associated with two TCI states and that DCI in the PDCCH that schedules the PDSCH carries TCI indication information, the TCI indication information includes two TCI states; and
in a case that a PDSCH is associated with two TCI states and that a time interval between the PDCCH that schedules the PDSCH and the PDSCH is less than a threshold, a CORESET with the lowest identity ID in the latest debugging slot of the PDSCH including CORESETs is associated with two TCI states; where
a type of the PDSCH includes a terminal-specific type or another type, which is not limited herein; and a type of the PDCCH includes a terminal-specific type or another type, which is not limited herein.

In an implementation of this application, the PDSCH TCI state information satisfies one or more of the following:
in a case that a PDCCH that schedules the PDSCH is associated with two TCI states, the PDSCH is associated with two TCI states; and
in a case that a PDCCH that schedules the PDSCH is associated with one TCI state, the PDSCH is associated with one TCI state; where
a type of the PDCCH that schedules the PDSCH includes a terminal-specific type or another type, which is not limited herein; and a type of the PDSCH includes a terminal-specific type or another type, which is not limited herein.

The apparatus provided in this embodiment of this application is capable of implementing the processes implemented in the method embodiment shown in FIG. 4, with the same technical effects achieved. To avoid repetition, details are not described herein again.

The scheduling apparatus in this embodiment of this application may be an apparatus or an apparatus or electronic device having an operating system, or may be a component, an integrated circuit, or a chip in the network-side device. The apparatus or electronic device may be a base station or may be another network-side device.

An embodiment of this application further provides a terminal including a processor and a communications interface. The communications interface is configured to receive first scheduling information and/or second scheduling information. The terminal embodiment is corresponding to the method embodiment on the terminal side. The implementation processes and implementations of the foregoing method embodiment are applicable to the terminal embodiment, with the same technical effects achieved.

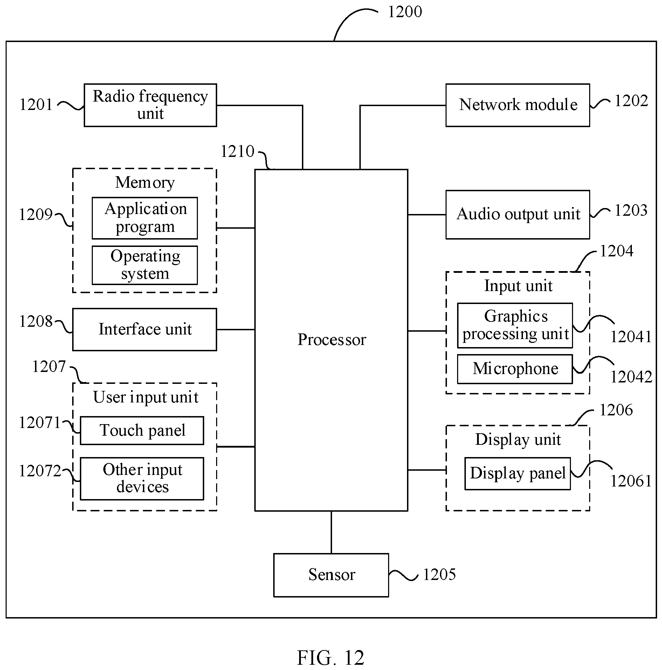

Specifically, FIG. 12 is a schematic diagram of a hardware structure of a terminal according to an embodiment of this application. The terminal 1200 includes but is not limited to at least some of the components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

It can be understood by those skilled in the art that the terminal 1200 may further include a power supply (for example, a battery) supplying power to the components. The power supply may be logically connected to the processor 1210 via a power management system, so that functions such as charge management, discharge management, and power consumption management are implemented by using the power management system. The structure of the terminal shown in FIG. 12 does not constitute any limitation on the terminal, and the terminal may include more or fewer components than shown in the figure, or combine some of the components, or have different arrangements of the components. Details are not described herein.

It should be understood that in this embodiment of this application, the input unit 1204 may include a graphics processing unit (Graphics Processing Unit, GPU) 12041 and a microphone 12042. The graphics processing unit 12041 processes image data of a static picture or a video that is obtained by an image capture apparatus (for example, a camera) in a video capture mode or an image capture mode. The display unit 1206 may include a display panel 12061. The display panel 12061 may be configured in a form of a liquid crystal display, an organic light-emitting diode display, or the like. The user input unit 1207 includes a touch panel 12071 and other input devices 12072. The touch panel 12071 is also referred to as a touchscreen. The touch panel 12071 may include two parts: a touch detection apparatus and a touch controller. The other input devices 12072 may include but are not limited to a physical keyboard, a functional button (such as a volume control button or a power on/off button), a trackball, a mouse, and a joystick. Details are not described herein.

In this embodiment of this application, the radio frequency unit 1201 sends downlink data received from a network-side device to the processor 1210 for processing, and in addition, sends uplink data to the network-side device. Generally, the radio frequency unit 1201 includes but is not limited to an antenna, at least one amplifier, a transceiver, a coupler, a low noise amplifier, a duplexer, and the like.

The memory 1209 may be configured to store software programs or instructions and various data. The memory 1209 may include a program or instruction storage area and a data storage area. The program or instruction storage area may store an operating system, an application program or instruction required by at least one function (for example, a sound playback function or an image playback function), and the like. Further, the memory 1209 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or other non-volatile solid-state storage devices.

The processor 1210 may include one or more processing units. Optionally, an application processor and a modem processor may be integrated in the processor 1210. The application processor primarily processes an operating system, user interfaces, application programs or instructions, and the like. The modem processor primarily processes radio communication, for example, being a baseband processor. It can be understood that the modem processor may be alternatively not integrated in the processor 1210.

The terminal provided in this embodiment of this application is capable of implementing the processes implemented in the method embodiment shown in FIG. 3, with the same technical effects achieved. To avoid repetition, details are not described herein again.

An embodiment of this application further provides a network-side device including a processor and a communications interface. The communications interface is configured to transmit first scheduling information and/or second scheduling information. The network-side device embodiment is corresponding to the method embodiment on the network-side device side. The implementation processes and implementations of the foregoing method embodiment are applicable to the network-side device embodiment, with the same technical effects achieved.

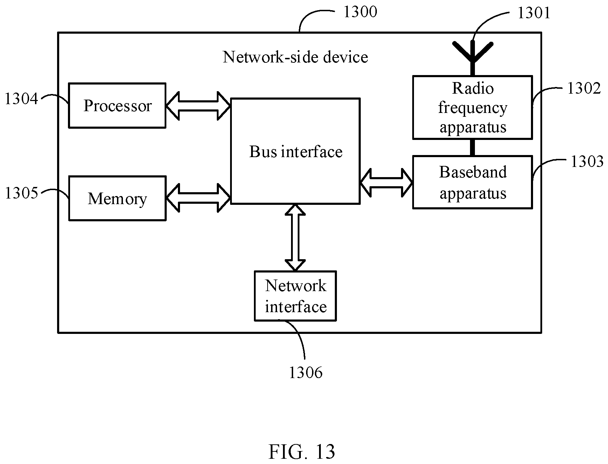

Specifically, an embodiment of this application further provides a network-side device. As shown in FIG. 13, the network-side device 1300 includes an antenna 1301, a radio frequency apparatus 1302, and a baseband apparatus 1303. The antenna 1301 is connected to the radio frequency apparatus 1302. In an uplink direction, the radio frequency apparatus 1302 receives information by using the antenna 1301, and transmits the received information to the baseband apparatus 1303 for processing. In a downlink direction, the baseband apparatus 1303 processes to-be-transmitted information, and transmits the information to the radio frequency apparatus 1302; and the radio frequency apparatus 1302 processes the received information and then transmits the information by using the antenna 1301.

The frequency band processing apparatus may be located in the baseband apparatus 1303. The method performed by the network-side device in the foregoing embodiment may be implemented in the baseband apparatus 1303, and the baseband apparatus 1303 includes a processor 1304 and a memory 1305.

The baseband apparatus 1303 may include, for example, at least one baseband processing unit, where a plurality of chips are disposed on the baseband processing unit. As shown in FIG. 13, one of the chips is, for example, the processor 1304, and connected to the memory 1305, to invoke the program in the memory 1305 to perform the operations of the network device shown in the foregoing method embodiments.

The baseband apparatus 1303 may further include a network interface 1306, configured to exchange information with the radio frequency apparatus 1302, where the interface is, for example, a common public radio interface (common public radio interface, CPRI for short).

Specifically, the network-side device in this embodiment of this application further includes: instructions or a program stored in the memory 1305 and capable of running on the processor 1304. The processor 1304 invokes the instructions or program in the memory 1305 to execute the method executed by the modules shown in FIG. 11, with the same technical effects achieved. To avoid repetition, details are not described herein again.

An embodiment of this application further provides a computer program/program product, where the computer program/program product is stored in a non-volatile storage medium, and the computer program/program product is executed by at least one processor to implement the steps of the method for processing shown in FIG. 3 and FIG. 4.

An embodiment of this application further provides a readable storage medium. The readable storage medium stores a program or instructions. When the program or instructions are executed by a processor, the processes of the method embodiments shown in FIG. 3 and FIG. 4 are implemented, with the same technical effects achieved. To avoid repetition, details are not described herein again.

The processor is a processor in the terminal in the foregoing embodiments. The readable storage medium includes a computer-readable storage medium such as a computer read-only memory (Read-Only Memory, ROM), a random access memory (Random Access Memory, RAM), a magnetic disk, or an optical disc.

An embodiment of this application further provides a chip. The chip includes a processor and a communications interface. The communications interface is coupled to the processor. The processor is configured to run a program or instructions to implement the processes of the control method embodiments in FIG. 3 and FIG. 4, with the same technical effects achieved. To avoid repetition, details are not described herein again.

It should be understood that the chip mentioned in this embodiment of this application may also be referred to as a system-level chip, a system chip, a chip system, a system-on-chip, or the like.

It should be noted that the terms "comprise", "include", or any of their variants in this specification are intended to cover a non-exclusive inclusion, such that a process, method, article, or apparatus that includes a list of elements includes not only those elements but also other elements that are not expressly listed, or further includes elements inherent to such process, method, article, or apparatus. In the absence of more restrictions, an element preceded by "including a ..." does not preclude another same element in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

By means of the foregoing description of the implementations, persons skilled in the art may clearly understand that the methods in the foregoing embodiments may be implemented by software with a necessary general hardware platform. Certainly, the methods in the foregoing embodiments may also be implemented by hardware. However, in many cases, the former is a preferred implementation. Based on such an understanding, the technical solutions of this application essentially, or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

Embodiments of this application have been described with reference to the accompanying drawings. However, this application is not limited to the foregoing specific implementations. These specific implementations are merely for illustration rather than limitation. Inspired by this application, persons of ordinary skill in the art may develop many other forms which do not depart from the essence of this application and the protection scope of the claims, and all such forms shall fall within the protection scope of this application.

## Claims

1. A scheduling method, comprising:
receiving, by a terminal, first scheduling information and/or second scheduling information; wherein
the first scheduling information is used to schedule the terminal in a case that the terminal reports transmission scheme switching capability information, the transmission scheme switching referring to switching between a single frequency network SFN transmission scheme and other transmission schemes; and
the second scheduling information is used to schedule the terminal in a case that a network-side device configures an SFN transmission scheme.

2. The method according to claim 1, wherein the transmission scheme switching capability information comprises one or more of the following:
first information, the first information being used to indicate whether the terminal supports dynamic switching between the SFN transmission scheme and a single transmission reception point TRP transmission scheme;
second information, the second information being used to indicate whether the terminal supports dynamic switching between the SFN transmission scheme and a first transmission scheme, wherein the first transmission scheme comprises one or more of the following:
frequency division multiplexing multi-TRP transmission scheme;
time division multiplexing multi-TRP transmission scheme; and
space division multiplexing multi-TRP transmission scheme;
third information, the third information being used to indicate a maximum number of search spaces capable of being associated with control resource set zero CORESETO monitored by the terminal;
fourth information, the fourth information being used to indicate types of search spaces capable of being associated with CORESETO monitored by the terminal;
fifth information, the fifth information being used to indicate whether CORESETO monitored by the terminal allows for association of a terminal-specific search space;
sixth information, the sixth information being used to indicate whether CORESETO monitored by the terminal allows terminal-specific scheduling;
seventh information, the seventh information being used to indicate whether the terminal monitors physical downlink control information PDCCH information scrambled by a first radio network temporary identifier RNTI on CORESETO; and
eighth information, the eighth information being used to indicate an effective time of the transmission scheme switching by the terminal, wherein the effective time of the transmission scheme switching by the terminal is a single value or one or more values in correspondence with one or more subcarrier spacings.

3. The method according to claim 1 or 2, wherein in a case that the terminal reports the transmission scheme switching capability information, the first scheduling information explicitly or implicitly indicates one or more of the following:
CORESETO related configuration information;
information about a time interval between a first PDCCH and a first physical downlink shared channel PDSCH or between a first PDCCH and a second PDCCH or between a first PDSCH and a second PDSCH; wherein the first PDCCH is used for scheduling the first PDSCH; and the second PDCCH is used for scheduling the second PDSCH;
transmission configuration indicator TCI state information associated with a PDCCH;
TCI state information associated with a PDSCH; and
media access control MAC control element CE information for activating a TCI state associated with a PDSCH.

4. The method according to claim 3, wherein the CORESETO related configuration information satisfies one or more of the following:
the number of search spaces associated with the CORESETO monitored by the terminal is less than or equal to the third information reported by the terminal or a maximum number of search spaces capable of being associated by default;
search spaces associated with the CORESETO monitored by the terminal comprise one or more of the following: search space zero; a common search space configured in system information block 1; and a common search space configured in a physical downlink control channel common configuration; and
the CORESETO is used for common information scheduling.

5. The method according to claim 3, wherein the information about a time interval between a first PDCCH and a first PDSCH or between a first PDCCH and a second PDCCH or between a first PDSCH and a second PDSCH satisfies one or more of the following:
in a case that the first PDCCH is associated with one TCI state and that the first PDSCH is associated with two TCI states, a time interval between the first PDCCH and the first PDSCH is greater than or equal to the eighth information reported by the terminal or a default effective time of a terminal transmission scheme switching;
in a case that the first PDCCH is associated with two TCI states and that the first PDSCH is associated with one TCI state, a time interval between the first PDCCH and the first PDSCH is greater than or equal to the eighth information reported by the terminal or a default effective time of a terminal transmission scheme switching;
in a case that the first PDCCH is associated with one TCI state and that the second PDCCH is associated with two TCI states, a time interval between the first PDCCH and the second PDCCH is greater than or equal to the eighth information reported by the terminal or a default effective time of a terminal transmission scheme switching; and
in a case that the first PDSCH is associated with one TCI state and that the second PDSCH is associated with two TCI states, a time interval between the first PDSCH and the second PDSCH is greater than or equal to the eighth information reported by the terminal or a default effective time of a terminal transmission scheme switching; wherein
the default effective time of the terminal transmission scheme switching is a value independent of the subcarrier spacing or values in one-to-one correspondence with subcarrier spacings, and the subcarrier spacing is configured by the network-side device.

6. The method according to claim 3, wherein the TCI state information associated with a PDCCH satisfies one or more of the following:
in a case that a PDSCH is associated with two TCI states and that the PDSCH is scheduled by the PDCCH in the form of downlink control information DCI format 1_0, the PDCCH is associated with two TCI states;
in a case that a PDSCH is associated with two TCI states and that the PDCCH that schedules the PDSCH is associated with only one TCI state, DCI in the PDCCH carries TCI indication information, and the TCI indication information comprises two TCI states; and
in a case that a PDSCH is associated with two TCI states and that a scheduling time interval between the PDCCH that schedules the PDSCH and the PDSCH is less than a threshold, a CORESET with the lowest identity ID in the latest debugging slot of the PDSCH comprising CORESETs is associated with two TCI states; wherein
a type of the PDSCH comprises a terminal-specific type; and a type of the PDCCH comprises a terminal-specific type.

7. The method according to claim 3, wherein the TCI state information associated with a PDSCH satisfies one or more of the following:
in a case that a PDCCH that schedules the PDSCH is associated with two TCI states, the PDSCH is associated with two TCI states; and
in a case that a PDCCH that schedules the PDSCH is associated with one TCI state, the PDSCH is associated with one TCI state; wherein
a type of the PDCCH that schedules the PDSCH comprises a terminal-specific type; and a type of the PDSCH comprises a terminal-specific type.

8. The method according to claim 3, wherein the MAC CE information for activating a TCI state associated with a PDSCH satisfies that the number of TCI states corresponding to each TCI field in the MAC CE information is two.

9. The method according to claim 1, wherein the second scheduling information comprises: PDCCH TCI state information.

10. The method according to claim 9, wherein the PDCCH TCI state information satisfies one or more of the following:
in a case that a PDSCH is associated with two TCI states, the PDCCH that schedules the PDSCH is associated with two TCI states; and
in a case that a PDSCH is associated with two TCI states and that the PDSCH is scheduled by the PDCCH in the form of DCI format 1_0, the PDCCH is associated with two TCI states;
in a case that a PDSCH is associated with two TCI states and that DCI in the PDCCH that schedules the PDSCH carries TCI indication information, the TCI indication information comprises two TCI states; and
in a case that a PDSCH is associated with two TCI states and that a time interval between the PDCCH that schedules the PDSCH and the PDSCH is less than a threshold, a CORESET with the lowest ID in the latest debugging slot of the PDSCH comprising CORESETs is associated with two TCI states; wherein
a type of the PDSCH comprises a terminal-specific type; and a type of the PDCCH comprises a terminal-specific type.

11. The method according to claim 1, wherein the second scheduling information comprises PDSCH TCI state information.

12. The method according to claim 11, wherein the PDSCH TCI state information satisfies one or more of the following:
in a case that a PDCCH that schedules the PDSCH is associated with two TCI states, the PDSCH is associated with two TCI states; and
in a case that a PDCCH that schedules the PDSCH is associated with one TCI state, the PDSCH is associated with one TCI state; wherein
a type of the PDCCH that schedules the PDSCH comprises a terminal-specific type; and a type of the PDSCH comprises a terminal-specific type.

13. A scheduling method, comprising:
transmitting, by a network-side device, first scheduling information and/or second scheduling information; wherein
the first scheduling information is used to schedule a terminal in a case that the terminal reports transmission scheme switching capability information, the transmission scheme switching referring to switching between an SFN transmission scheme and other transmission schemes; and the second scheduling information is used to schedule the terminal in a case that the network-side device configures an SFN transmission scheme.

14. The method according to claim 13, wherein the transmission scheme switching capability information comprises one or more of the following:
first information, the first information being used to indicate whether the terminal supports dynamic switching between the SFN transmission scheme and a single transmission reception point TRP transmission scheme;
second information, the second information being used to indicate whether the terminal supports dynamic switching between the SFN transmission scheme and a first transmission scheme, wherein the first transmission scheme comprises one or more of the following:
frequency division multiplexing multi-TRP transmission scheme;
time division multiplexing multi-TRP transmission scheme; and
space division multiplexing multi-TRP transmission scheme;
third information, the third information being used to indicate a maximum number of search spaces capable of being associated with CORESETO monitored by the terminal;
fourth information, the fourth information being used to indicate types of search spaces capable of being associated with CORESETO monitored by the terminal;
fifth information, the fifth information being used to indicate whether CORESETO monitored by the terminal allows for association of a terminal-specific search space;
sixth information, the sixth information being used to indicate whether CORESETO monitored by the terminal allows terminal-specific scheduling;
seventh information, the seventh information being used to indicate whether the terminal monitors physical downlink control information PDCCH information scrambled by a first RNTI on CORESETO; and
eighth information, the eighth information being used to indicate an effective time of the transmission scheme switching by the terminal, wherein the effective time of the transmission scheme switching by the terminal is a single value or one or more values in correspondence with one or more subcarrier spacings.

15. The method according to claim 13 or 14, wherein in a case that the terminal reports the transmission scheme switching capability information, the first scheduling information explicitly or implicitly indicates one or more of the following:
CORESETO related configuration information;
information for defining a time interval between a first PDCCH and a first PDSCH or between a first PDCCH and a second PDCCH or between a first PDSCH and a second PDSCH; wherein the first PDCCH is used for scheduling the first PDSCH; and the second PDCCH is used for scheduling the second PDSCH;
TCI state information associated with a PDCCH;
TCI state information associated with a PDSCH; and
MAC CE information for activating a TCI state associated with a PDSCH.

16. The method according to claim 15, wherein the CORESETO related configuration information satisfies one or more of the following:
the number of search spaces associated with the CORESETO monitored by the terminal is less than or equal to the third information reported by the terminal or a maximum number of search spaces capable of being associated by default;
search spaces associated with the CORESETO monitored by the terminal comprise one or more of the following: search space zero; a common search space configured in system information block 1; and a common search space configured in a physical downlink control channel common configuration; and
the CORESETO is used for public information scheduling.

17. The method according to claim 15, wherein the information about a time interval between a first PDCCH and a first PDSCH or between a first PDCCH and a second PDCCH or between a first PDSCH and a second PDSCH satisfies one or more of the following:
in a case that the first PDCCH is associated with one TCI state and that the first PDSCH is associated with two TCI states, a time interval between the first PDCCH and the first PDSCH is greater than or equal to the eighth information reported by the terminal or a default effective time of a terminal transmission scheme switching;
in a case that the first PDCCH is associated with two TCI states and that the first PDSCH is associated with one TCI state, a time interval between the first PDCCH and the first PDSCH is greater than or equal to the eighth information reported by the terminal or a default effective time of a terminal transmission scheme switching;
in a case that the first PDCCH is associated with one TCI state and that the second PDCCH is associated with two TCI states, a time interval between the first PDCCH and the second PDCCH is greater than or equal to the eighth information reported by the terminal or a default effective time of a terminal transmission scheme switching; and
in a case that the first PDSCH is associated with one TCI state and that the second PDSCH is associated with two TCI states, a time interval between the first PDSCH and the second PDSCH is greater than or equal to the eighth information reported by the terminal or a default effective time of a terminal transmission scheme switching; wherein
the default effective time of the terminal transmission scheme switching is a value independent of the subcarrier spacing or values in one-to-one correspondence with subcarrier spacings, and the subcarrier spacing is configured by the network-side device.

18. The method according to claim 15, wherein the TCI state information associated with a PDCCH satisfies one or more of the following:
in a case that a PDSCH is associated with two TCI states and that the PDSCH is scheduled by the PDCCH in the form of DCI format 1_0, the PDCCH is associated with two TCI states;
in a case that a PDSCH is associated with two TCI states and that the PDCCH that schedules the PDSCH is associated with only one TCI state, DCI in the PDCCH carries TCI indication information, and the TCI indication information comprises two TCI states; and
in a case that a PDSCH is associated with two TCI states and that a scheduling time interval between the PDCCH that schedules the PDSCH and the PDSCH is less than a threshold, a CORESET with the lowest ID in the latest debugging slot of the PDSCH comprising CORESETs is associated with two TCI states; wherein
a type of the PDSCH comprises a terminal-specific type; and a type of the PDCCH comprises a terminal-specific type.

19. The method according to claim 15, wherein the TCI state information associated with a PDSCH satisfies one or more of the following:
in a case that a PDCCH that schedules the PDSCH is associated with two TCI states, the PDSCH is associated with two TCI states; and
in a case that a PDCCH that schedules the PDSCH is associated with one TCI state, the PDSCH is associated with one TCI state; wherein
a type of the PDCCH that schedules the PDSCH comprises a terminal-specific type; and a type of the PDSCH comprises a terminal-specific type.

20. The method according to claim 15, wherein the MAC CE information for activating a PDSCH TCI state satisfies that the number of TCI states corresponding to each TCI field in the MAC CE information is two.

21. The method according to claim 13, wherein the second scheduling information comprises: PDCCH TCI state information.

22. The method according to claim 21, wherein the PDCCH TCI state information satisfies one or more of the following:
in a case that a PDSCH is associated with two TCI states, the PDCCH that schedules the PDSCH is associated with two TCI states; and
in a case that a PDSCH is associated with two TCI states and that the PDSCH is scheduled by the PDCCH in the form of DCI format 1_0, the PDCCH is associated with two TCI states;
in a case that a PDSCH is associated with two TCI states and that DCI in the PDCCH that schedules the PDSCH carries TCI indication information, the TCI indication information comprises two TCI states; and
in a case that a PDSCH is associated with two TCI states and that a time interval between the PDCCH that schedules the PDSCH and the PDSCH is less than a threshold, a CORESET with the lowest ID in the latest debugging slot of the PDSCH comprising CORESETs is associated with two TCI states; wherein
a type of the PDSCH comprises a terminal-specific type; and a type of the PDCCH comprises a terminal-specific type.

23. The method according to claim 13, wherein the second scheduling information comprises PDSCH TCI state information.

24. The method according to claim 23, wherein the PDSCH TCI state information satisfies one or more of the following:
in a case that a PDCCH that schedules the PDSCH is associated with two TCI states, the PDSCH is associated with two TCI states; and
in a case that a PDCCH that schedules the PDSCH is associated with one TCI state, the PDSCH is associated with one TCI state; wherein
a type of the PDCCH that schedules the PDSCH comprises a terminal-specific type; and a type of the PDSCH comprises a terminal-specific type.

25. A scheduling apparatus, comprising:
a first receiving module configured to receive first scheduling information and/or second scheduling information; wherein
the first scheduling information is used to schedule a terminal in a case that the terminal reports transmission scheme switching capability information, the transmission scheme switching referring to switching between an SFN transmission scheme and other transmission schemes; and the second scheduling information is used to schedule the terminal in a case that the network-side device configures an SFN transmission scheme.

26. A scheduling apparatus, comprising:
a second transmitting module configured to transmit first scheduling information and/or second scheduling information; wherein
the first scheduling information is used to schedule a terminal in a case that the terminal reports transmission scheme switching capability information, the transmission scheme switching referring to switching between an SFN transmission scheme and other transmission schemes; and the second scheduling information is used to schedule the terminal in a case that the network-side device configures an SFN transmission scheme.

27. A terminal, comprising a processor, a memory, and a program stored in the memory and capable of running on the processor, wherein when the program is executed by the processor, the steps of the method according to any one of claims 1 to 12 are implemented.

28. A terminal, comprising a processor and a communications interface, wherein the processor, when configured for execution, implements the steps of the method according to any one of claims 1 to 12.

29. A network-side device, comprising a processor, a memory, and a program stored in the memory and capable of running on the processor, wherein when the program is executed by the processor, the steps of the method according to any one of claims 13 to 24 are implemented.

30. Anetwork-side device, comprising a processor and a communications interface, wherein the communications interface, when configured for execution, implements the steps of the method according to any one of claims 13 to 24.

31. A readable storage medium, wherein the readable storage medium stores a program or instructions, and when the program or instructions are executed by a processor, the steps of the method according to any one of claims 1 to 24 are implemented.

32. A computer program/program product, wherein the computer program/program product is stored in a non-volatile storage medium, and the computer program/program product is executed by at least one processor to implement the steps of the method according to any one of claims 1 to 24.

33. A chip, wherein the chip comprises a processor and a communications interface, the communications interface is coupled to the processor, the processor is configured to run a program or instructions to implement the steps of the method according to any one of claims 1 to 24.
